# EUROPEAN PATENT APPLICATION

(11) **EP 3 210 759 A1**
(43) Date of publication of application: **30.08.2017**
(21) Application number: 16182323.2
(22) Date of filing: 02.08.2016
(51) Int. Cl.: B29C 67/00, B33Y 30/00, B33Y 10/00

(54) **SHAPING APPARATUS**

(30) Priority: 29.02.2016 JP 2016037950
(71) Applicant: Fuji Xerox Co., Ltd., Minato-ku, Tokyo (JP)
(72) Inventor: MORI, Satoshi, Ebina-shi, Kanagawa (JP)
(74) Representative: Ward, James Norman

(57) **Abstract**

A shaping apparatus 10 includes: a bench unit 122 that has a light shielding wall 128 around the bench unit 122; an ejecting unit 22/24 that is moved relatively with respect to the bench unit 122 and ejects a droplet of a light curable shaping liquid toward the bench unit 122; and an irradiating unit 50 that performs scanning the ejected droplet on the bench unit 122 with irradiation light LB/LA1/LA2 to cure the droplet in a state where the ejecting unit 22/24 is moved to outside from the light shielding wall 128.

## Description

### BACKGROUND

### (i) Technical Field

The present invention relates to a shaping apparatus.

### (ii) Related Art

Patent Document 1 discloses a technology related to a liquid ejection apparatus. In Patent Document 1, there are provided an ejection head that has an ejection hole through which a light curing-type liquid supplied from a supply unit is ejected onto an ejection target medium, and a light source that radiates light curing the light curing-type liquid ejected through the ejection hole. In addition, there are provided a beam forming unit that causes light radiated from the light source to be condensed and forms a light beam having a beam diameter smaller than a predetermined beam diameter, and a scanning-type optical unit that performs scanning with the light beam formed by the beam forming unit. A scanning control unit controls light beam-scanning performed by the scanning-type optical unit such that at least a scattering liquid ejected from the ejection head is irradiated with the light beam.

Patent Document 2 discloses a technology related to an inkjet recording device which performs image recording with respect to a recording medium having ink absorption properties. In Patent Document 2, a light curing-type ink applied to a recording medium is disposed such that light is radiated from a second light source after light is radiated from a first light source.

Patent Document 3 discloses a technology related to an image forming method through which an image is formed by curing a light curing-type ink through radiation of light after the light curing-type ink is applied onto a recording medium moving below a line-type ink jet head. In Patent Document 3, light radiated onto the recording medium from a first irradiating unit is radiated parallel to a discharging direction of the light curing-type ink and is condensed so as to cause a radiation range on the recording medium in an advancing direction to have a line shape from 2 mm to 10 mm. The light radiated from the first irradiating unit is light having a wavelength within a range from 300 nm to 390 nm, and illuminance of the light radiated from the first irradiating unit onto the recording medium ranges from 250 mW/cm² to 1,000 mW/cm².

Patent Document 4 discloses a technology related to a printing device which performs printing by using a UV ink. In Patent Document 4, radial rays respectively radiated from a first irradiating unit to a third irradiating unit have peak wavelengths within 350 nm to 450 nm. Color materials included in a third ink and a fourth ink have absorption characteristics of the radial ray in the peak wavelength higher than color materials included in a first ink and a second ink.
[Patent Document 1] JP-A-2005-212445
[Patent Document 2] JP-A-2008-073916
[Patent Document 3] JP-A-2010-274584
[Patent Document 4] JP-A-2014-195890

### SUMMARY

When reflected light of the irradiation light curing a shaping liquid is radiated to the ejection surface of the ejecting unit which ejects the droplet of the light curable shaping liquid, there is concern that the shaping liquid on the ejection surface is cured.

The present invention aims to reduce the intensity of reflected light radiated to an ejection surface of an ejecting unit which ejects a droplet of a light curable shaping liquid compared to a case where scanning performed with irradiation light is not performed in a state where the ejecting unit is moved to the outside from a light shielding wall.

A first aspect of the invention is a shaping apparatus comprising: a bench unit that has a light shielding wall around the bench unit; an ejecting unit that is moved relatively with respect to the bench unit and ejects a droplet of a light curable shaping liquid toward the bench unit; and an irradiating unit that performs scanning the ejected droplet on the bench unit with irradiation light to cure the droplet in a state where the ejecting unit is moved to outside from the light shielding wall.

A second aspect of the invention is the shaping apparatus according to the first aspect, wherein the irradiating unit performs the scanning with the irradiation light in a moving direction in which the ejecting unit is moved relatively with respect to the bench unit.

A third aspect of the invention is the shaping apparatus according to the second aspect, wherein the irradiating unit is moved in the moving direction to perform the scanning with the irradiation light.

A fourth aspect of the invention is the shaping apparatus according to the second aspect, wherein the irradiating unit is rotated about a rotary axis orthogonal to the moving direction to perform the scanning with the irradiation light.

A fifth aspect of the invention is the shaping apparatus according to the fourth aspect, wherein the irradiating unit is rotated in a direction in which an emission surface of the irradiating unit emitting the irradiation light is separated from the ejecting unit to perform the scanning with the irradiation light.

A sixth aspect of the invention is the shaping apparatus according to the first aspect, wherein the irradiating unit performs the scanning with the irradiation light in an intersecting direction intersecting a direction in which the ejecting unit is moved relatively with respect to the bench unit.

A seventh aspect of the invention is the shaping apparatus according to the sixth aspect, wherein the irradiating unit is moved in the intersecting direction to perform the scanning with the irradiation light.

An eighth aspect of the invention is the shaping apparatus according to the sixth aspect, wherein the irradiating unit is rotated about a rotary axis orthogonal to the intersecting direction to perform the scanning with the irradiation light.

A ninth aspect of the invention is the shaping apparatus according to any one of the first to eighth aspects, wherein a shutter that is able to be lowered more than an upper end portion of the light shielding wall is provided between the ejecting unit and the irradiating unit.

A tenth aspect of the invention is the shaping apparatus according to any one of the first to ninth aspects, which further comprises only one flattening unit which comes into contact with the ejected droplet on the bench unit to perform flattening.

According to the first aspect of the invention, the intensity of reflected light radiated to the ejection surface of the ejecting unit which ejects the droplet of the light curable shaping liquid may be reduced compared to a case where irradiation light-scanning is not performed in a state where the ejecting unit is moved to the outside from the light shielding wall.

According to the second aspect of the invention, a radiation spectrum of the irradiating unit in the moving direction may be narrowed compared to a case where the irradiation light-scanning is not performed in the moving direction.

According to the third aspect of the invention, the radiation spectrum of the irradiating unit in the moving direction may be narrowed compared to a case where the irradiating unit does not move in the moving direction.

According to the fourth aspect of the invention, the radiation spectrum of the irradiating unit in the moving direction may be narrowed compared to a case where the irradiating unit does not rotate in the moving direction.

According to the fifth aspect of the invention, the intensity of the reflected light radiated to the ejection surface of the ejecting unit which ejects the droplet of the light curable shaping liquid is reduced compared to a case of rotating in a direction in which the emission surface emitting the irradiation light approaches the ejecting unit.

According to the sixth aspect of the invention, the radiation spectrum of the irradiating unit in the intersecting direction may be narrowed compared to a case where the irradiation light-scanning is not performed in the intersecting direction.

According to the seventh aspect of the invention, the radiation spectrum of the irradiating unit in the intersecting direction may be narrowed compared to a case where the irradiating unit does not move in the intersecting direction.

According to the eighth aspect of the invention, the radiation spectrum of the irradiating unit in the intersecting direction may be narrowed compared to a case where the irradiating unit does not rotate in the intersecting direction.

According to the ninth aspect of the invention, the intensity of the reflected light radiated to the ejection surface of the ejecting unit which ejects the droplet of the light curable shaping liquid is reduced compared to a case where there is provided the shutter which is lowered to only an extent above the upper end portion of the light shielding wall.

According to the tenth aspect of the invention, precision in flattening is improved compared to a case where multiple flattening units are provided in the moving unit.

### BRIEF DESCRIPTION OF THE DRAWINGS

Fig. 1 is a perspective view schematically illustrating a shaping apparatus of a first exemplary embodiment;
Fig. 2 is a side view schematically illustrating the shaping apparatus of the first exemplary embodiment viewed in a Y-direction;
Fig. 3 is a block diagram of the shaping apparatus of the first exemplary embodiment;
Figs. 4A and 4B are views respectively illustrating points in time of radiation from a second irradiating unit and scanning when a three-dimensional object is shaped while a shaping section main body of the shaping apparatus of the first exemplary embodiment is relatively moving in a positive A-direction, Fig. 4A is a view before radiation, and Fig. 4B is a view after radiation;
Figs. 5A and 5B are views respectively illustrating points in time of radiation from the second irradiating unit and scanning when a three-dimensional object is shaped while the shaping section main body of the shaping apparatus of the first exemplary embodiment is relatively moving in a negative A-direction, Fig. 5A is a view before radiation, and Fig. 5B is a view after radiation;
Fig. 6 is a plan view schematically illustrating the shaping apparatus of the first exemplary embodiment viewed in a Z-direction;
Figs. 7A and 7B are views respectively illustrating points in time of radiation from a second irradiating unit and scanning when a three-dimensional object is shaped while a shaping section main body of a shaping apparatus of a second exemplary embodiment is relatively moving in the positive A-direction, Fig. 7A is a view before radiation, and Fig. 7B is a view after radiation;
Figs. 8A and 8B are views respectively illustrating points in time of radiation from the second irradiating unit and scanning when a three-dimensional object is shaped while the shaping section main body of the shaping apparatus of the second exemplary embodiment is relatively moving in the negative A-direction, Fig. 8A is a view before radiation, and Fig. 8B is a view after radiation;
Fig. 9 is a block diagram of the shaping apparatus of the second exemplary embodiment;
Fig. 10 is a view schematically illustrating a shaping apparatus of a third exemplary embodiment viewed in the Z-direction;
Fig. 11 is a front view schematically illustrating the shaping apparatus of the third exemplary embodiment viewed in an X-direction;
Fig. 12 is a block diagram of the shaping apparatus of the third exemplary embodiment;
Fig. 13 a plan view schematically illustrating a shaping apparatus of a fourth exemplary embodiment viewed in the Z-direction;
Fig. 14 is a plan view of a state where a shaping section main body of the shaping apparatus of the fourth exemplary embodiment moves relatively in the positive A-direction from the state of Fig. 13 and is positioned on a workbench, viewed in the Z-direction;
Fig. 15 is a plan view of a state where the shaping section main body of the shaping apparatus of the fourth exemplary embodiment moves relatively in the positive A-direction from the state of Fig. 14 and is positioned outside the workbench, and the second irradiating unit performs scanning in the Y-direction while performing radiation, viewed in the Z-direction;
Fig. 16 is a front view schematically illustrating the shaping apparatus of the fourth exemplary embodiment viewed in the X-direction;
Fig. 17 is a block diagram of the shaping apparatus of the fourth exemplary embodiment; and
Figs. 18A to 18C are process views illustrating a process in which a three-dimensional object is shaped while the shaping section main body of the shaping apparatus of a comparative example is relatively moving in the positive A-direction, from Figs. 18A to 18C in order.

### DETAILED DESCRIPTION

### [First Exemplary Embodiment]

An example of a shaping apparatus according to a first exemplary embodiment of the present invention will be described. An apparatus width direction of a shaping apparatus 10 will be referred to as an X-direction, an apparatus depth direction will be referred to as a Y-direction, and an apparatus height direction will be referred to as a Z-direction.

### Overall Configuration

First, an overall configuration of the shaping apparatus 10 which is a so-called three-dimensional printer will be described.

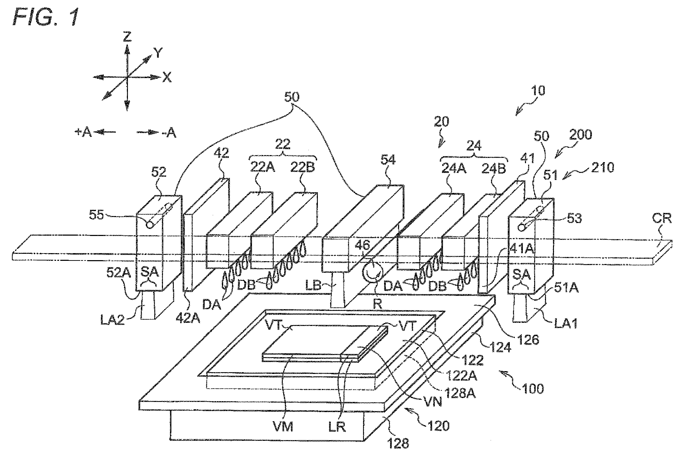

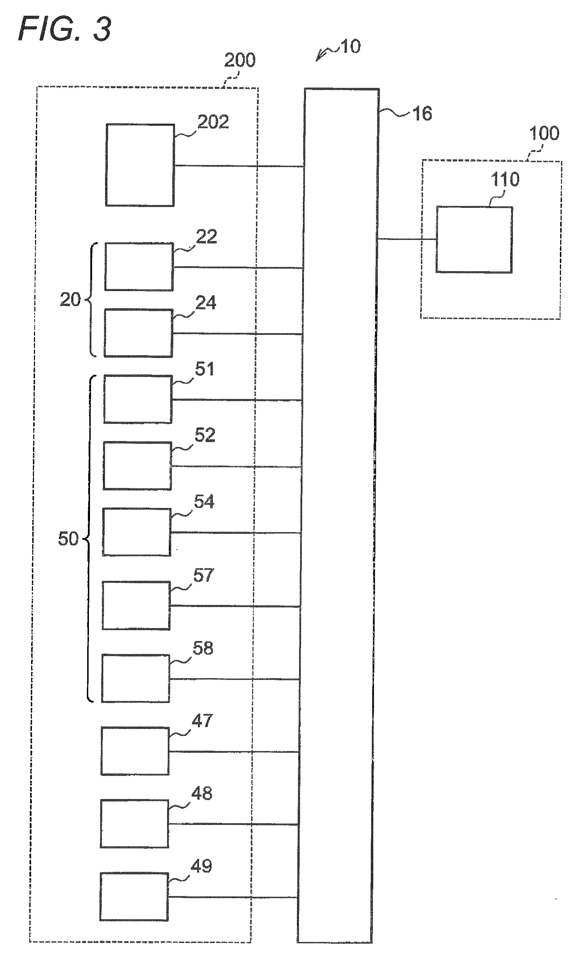

As illustrated in Fig. 1, the shaping apparatus 10 is configured to include a working section 100, a shaping section 200, and a control section 16 (see Fig. 3).

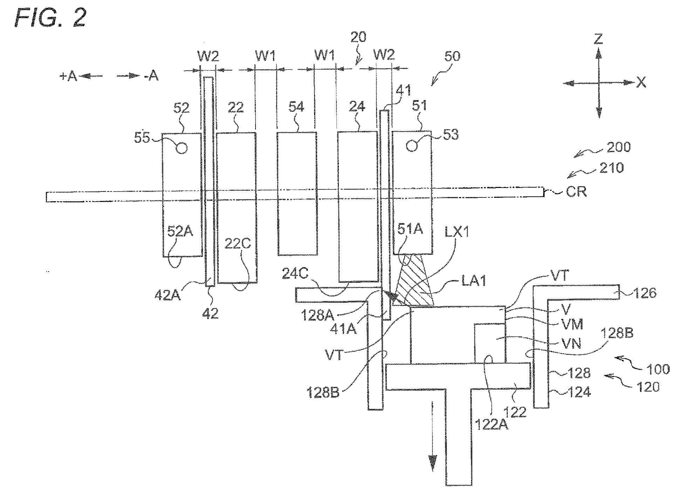

As illustrated in Fig. 1, in the shaping apparatus 10 of the present exemplary embodiment, droplets DA (model material) and droplets DB (support material) are ejected from a first ejecting unit 22 and a second ejecting unit 24 of a shaping section main body 210 (described below), and irradiation light LA1, irradiation light LA2, and irradiation light LB are radiated from a first irradiating unit 54 and second irradiating units 51 and 52 of an irradiator unit 50 (described below). After a three-dimensional object V (see also Fig. 2) is shaped on a workbench 122 (described below) by stacking layers LR which are formed from the droplets DA and DB cured through the radiation, a support portion VN (see also Fig. 2) is removed, thereby realizing a desired shaping object VM (see also Fig. 2). As described below, in the shaping object VM, in a case where there is no portion of which a lower portion is an empty space, the support portion VN is not shaped.

The below-described shaping section main body 210 ejects the droplets DA and DB and radiates the irradiation light LA1, the irradiation light LA2, and the irradiation light LB while moving reciprocally in the X-direction and relatively with respect to the workbench 122. Accordingly, there are cases where the X-direction is expressed as a moving direction. In reciprocating movement, a forward direction will be referred to as a positive A-direction, and a backward direction will be referred to as a negative A-direction.

### Control Section

The control section 16 illustrated in Fig. 3 has a function of controlling the shaping apparatus 10 in its entirety.

### Working Section

The working section 100 illustrated in Figs. 1 and 2 is configured to include a working section driving unit 110 (see Fig. 3) and a working section main body 120.

### Working Section Main Body

As illustrated in Figs. 1 and 2, the working section main body 120 is configured to include the workbench 122 which is an example of a bench unit, and a wall portion 124 provided around the workbench 122.

The top surface of the workbench 122 is a base surface 122A. The three-dimensional object V (see Fig. 2) is shaped on the base surface 122A. The wall portion 124 is configured to have a light shielding wall 128 enclosing the workbench 122, and a flange portion 126 extending from an upper end portion of the light shielding wall 128 to the outside in the apparatus width direction (X-direction) and to the outside in the apparatus depth direction (Y-direction).

The workbench 122 and the wall portion 124 configured to be included in the working section main body 120 are coated in black such that the irradiation light LA1, the irradiation light LA2, and the irradiation light LB (described below) are unlikely to be reflected. It is desirable that the coating is a dull mat finish.

### Working Section Driving Unit

The working section driving unit 110 illustrated in Fig. 3 has a function of moving the working section main body 120 (see Figs. 1 and 2) in its entirety in the apparatus width direction (X-direction) and moving only the workbench 122 (see Figs. 1 and 2) in the apparatus height direction (Z-direction).

### Shaping Section

As illustrated in Figs. 1 and 2, the shaping section 200 is configured to include the shaping section main body 210 and a shaping section driving unit 202 (see Fig. 3).

### Shaping Section Main Body

The shaping section main body 210 has an ejector unit 20, the irradiator unit 50, light shielding shutters 41 and 42, and a flattening roller 46 which is an example of a flattening unit. The ejector unit 20, the irradiator unit 50, the light shielding shutters 41 and 42, and the flattening roller 46 are provided in a carriage CR. Accordingly, the ejector unit 20, the irradiator unit 50, the light shielding shutters 41 and 42, and the flattening roller 46 configured to be included in the shaping section main body 210 are integrated and move relatively with respect to the workbench 122.

### Ejector Unit

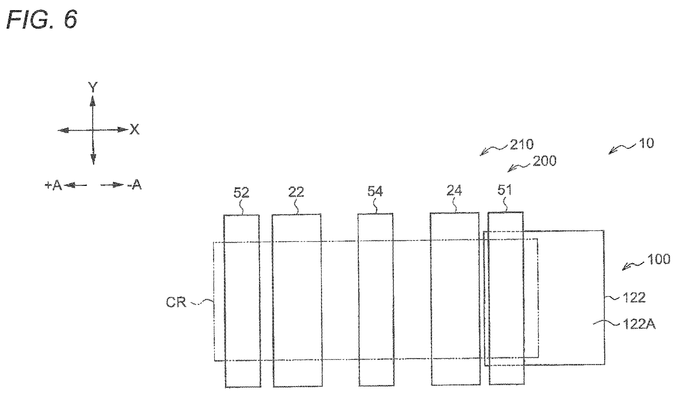

The ejector unit 20 has the first ejecting unit 22 and the second ejecting unit 24 which are disposed in the X-direction apart from each other (see also Fig. 6).

The first ejecting unit 22 and the second ejecting unit 24 respectively have model material ejecting heads 22A and 24A and support material ejecting heads 22B and 24B. The model material ejecting heads 22A and 24A and the support material ejecting heads 22B and 24B are elongated and are disposed while having the longitudinal directions along the apparatus depth direction (Y-direction). The model material ejecting heads 22A and 24A and the support material ejecting heads 22B and 24B are disposed in the apparatus width direction (X-direction) so as to be adjacent to or in contact with each other.

As illustrated in Fig. 1, the model material ejecting heads 22A and 24A eject the droplets DA of the model material which is an example of a shaping liquid shaping the shaping object VM (see Fig. 2) of the three-dimensional object V. The support material ejecting heads 22B and 24B eject the droplets DB of the support material which is an example of the shaping liquid shaping the support portion VN (see Fig. 2) that assists shaping of the three-dimensional object V shaped from the model material.

The model material ejecting heads 22A and 24A and the support material ejecting heads 22B and 24B in the present exemplary embodiment have structures similar to each other except that the types of the shaping liquids to be ejected are different from each other. Multiple nozzles (not illustrated) ejecting the droplets DA and DB are arranged on the bottom surfaces of the model material ejecting heads 22A and 24A and the support material ejecting heads 22B and 24B facing the base surface 122A of the workbench 122, from one end side to the other end side in the longitudinal direction (Y-direction) in a zigzag manner. The nozzles of the support material ejecting heads 22B and 24B are disposed so as to respectively overlap all the nozzles of the model material ejecting heads 22A and 24A in the apparatus width direction. The nozzles of the second ejecting unit 24 are disposed so as to be misaligned from the nozzles of the first ejecting unit 22 by half a pitch in the apparatus depth direction (Y-direction).

In a case where there is no need to distinguish between the model material ejecting heads 22A and 24A and the support material ejecting heads 22B and 24B, description will be given while applying the expression of the first ejecting unit 22 and the second ejecting unit 24. Without distinguishing between the model material ejecting heads 22A and 24A and the support material ejecting heads 22B and 24B, the bottom surfaces on which the nozzles of the first ejecting unit 22 and the second ejecting unit 24 are formed will be referred to as an ejection surface 22C and an ejection surface 24C, as illustrated in Fig. 2.

Here, the model material (droplets DA) and the support material (droplets DB) are examples of the shaping liquid having a light curable resin. The light curable resin in the present exemplary embodiment is an ultraviolet ray curing-type resin having properties of absorbing ultraviolet rays and being cured.

### Irradiator Unit

As illustrated in Figs. 1 and 2, the irradiator unit 50 is configured to radiate the irradiation light LA1, the irradiation light LA2, and the irradiation light LB from the first irradiating unit 54 and the second irradiating units 51 and 52 which are examples of the irradiating unit toward the base surface 122A of the workbench 122 from one end side to the other end side in the longitudinal direction (Y-direction). The applied droplets DA (model material) and the applied droplets DB (support material) are cured by being irradiated with the irradiation light LA1, the irradiation light LA2, and the irradiation light LB.

In the present exemplary embodiment, the intensity of the irradiation light LA1 from the second irradiating unit 51 and the intensity of the irradiation light LA2 from the second irradiating unit 52 are substantially the same as each other. The intensity of the irradiation light LB from the first irradiating unit 54 is lower than the intensity of the irradiation light LA1 and the irradiation light LA2 from the second irradiating units 51 and 52.

### First Irradiating Unit

As illustrated in Figs. 1 and 2, the first irradiating unit 54 is elongated and is disposed while having the longitudinal direction along the apparatus depth direction (Y-direction) (see also Fig. 6). The first irradiating unit 54 is disposed at the center portion between the first ejecting unit 22 and the second ejecting unit 24 in the X-direction (see also Fig. 6).

A gap between the first ejecting unit 22 or the second ejecting unit 24, and the first irradiating unit 54 will be referred to as a gap W1.

### Second Irradiating Unit

The second irradiating unit 51 and the second irradiating unit 52 which are examples of the irradiating unit have structures similar to each other except that the disposed positions are different from each other. The second irradiating unit 51 and the second irradiating unit 52 are elongated and are disposed while having the longitudinal directions along the apparatus depth direction (Y-direction) (see also Fig. 6). The second irradiating unit 52 on one side is disposed outside the first ejecting unit 22 in the X-direction (outside in the positive A-direction), and the second irradiating unit 51 on the other side is disposed outside the second ejecting unit 24 in the X-direction (outside in the negative A-direction) (see also Fig. 6).

A gap between the first ejecting unit 22 and the second irradiating unit 52, and a gap between the second ejecting unit 24 and the second irradiating unit 51 will be referred to as a gap W2. The gap W2 is narrower than the above-described gap W1 between the first ejecting unit 22 or the second ejecting unit 24 and the first irradiating unit 54.

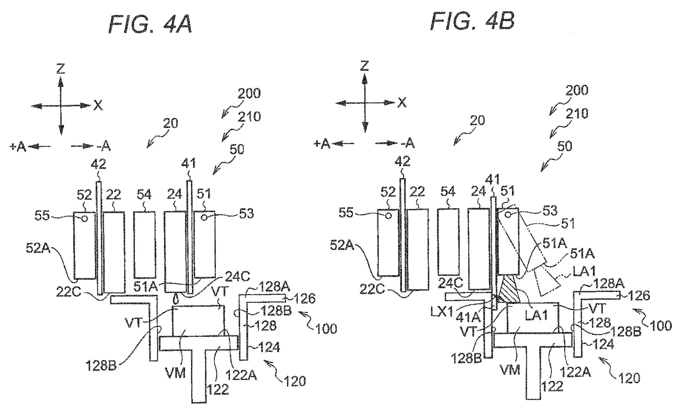

The second irradiating unit 51 is configured to rotate in the X-direction about a rotary axis 53 along the Y-direction by a rotary device 57 (see Fig. 3) provided in the carriage CR (see also Fig. 4B).

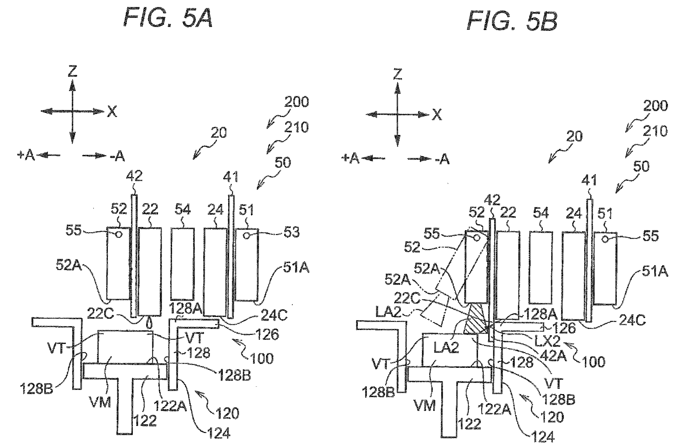

Similarly, the second irradiating unit 52 is configured to rotate in the X-direction about a rotary axis 55 along the Y-direction by a rotary device 59 (see Fig. 3) (see also Fig. 5B).

### Light Shielding Shutter

As illustrated in Fig. 1, the light shielding shutters 41 and 42 are respectively provided between the first ejecting unit 22 of the ejector unit 20 and the second irradiating unit 52 of the irradiator unit 50 and between the second ejecting unit 24 of the ejector unit 20 and the second irradiating unit 51 of the irradiator unit 50. The light shielding shutters 41 and 42 move in the apparatus height direction (Z-direction) by a shutter driving mechanism 47 (see Fig. 3). Lower end portions 41A and 42A of the light shielding shutters 41 and 42 move to locations on a side lower than an upper end portion 128A of the light shielding wall 128 (see Figs. 4B and 5B).

### Flattening Roller

As illustrated in Fig. 1, one flattening roller 46 which is an example of the flattening unit is provided at a location between the second ejecting unit 24 and the first irradiating unit 54 in the carriage CR.

The flattening roller 46 is a roller having the longitudinal direction along the Y-direction. The flattening roller 46 of the present exemplary embodiment is configured to be made from metal such as SUS. However, the material thereof is not limited thereto. The flattening roller 46 may be configured to be made from a resin, a rubber material, or the like.

The flattening roller 46 rotates in an R-direction by a rotation mechanism 48 which is controlled by the control section 16 illustrated in Fig. 3.

The flattening roller 46 is lifted and lowered in the apparatus height direction by a lifting and lowering mechanism 49 which is controlled by the control section 16 illustrated in Fig. 3.

The flattening roller 46 is lowered and fixed by the lifting and lowering mechanism 49 when flattening the three-dimensional object V. When not flattening the three-dimensional object V, the flattening roller 46 is withdrawn above by the lifting and lowering mechanism 49.

In the drawings other than Fig. 1, the flattening roller 46 is not illustrated.

### Shaping Section Driving Unit

The shaping section driving unit 202 illustrated in Fig. 3 is controlled by the control section 16 so as to move the shaping section main body 210 (see Fig. 1) to a maintenance station (home position, not illustrated) after a shaping operation ends or during the shaping operation, thereby performing various types of maintenance operations such as cleaning for preventing clogging of the nozzles in the first ejecting unit 22 and the second ejecting unit 24.

### Method of Shaping Three-dimensional Object

Subsequently, an example of a method of shaping the three-dimensional object V (shaping object VM) performed by the shaping apparatus 10 of the present exemplary embodiment will be described. First, an overview of the shaping method will be described, and then, the shaping method will be described in detail.

As illustrated in Figs. 1 and 2, the shaping apparatus 10 shapes the three-dimensional object V (see Fig. 2) on the base surface 122A of the workbench 122 by stacking the layers LR (see Fig. 1) which are formed from the model material and the support material cured through radiation of the irradiation light LA and the irradiation light LB.

As illustrated in Fig. 2, the support portion VN is shaped with the support material on a lower side of the three-dimensional object V having a portion of which a lower portion is an empty space, and the three-dimensional object V is shaped while being supported by the support portion VN. Lastly, the support portion VN is removed from the three-dimensional object V, and then, the shaping object VM having a desired shape is completed.

Subsequently, the shaping method will be described in detail.

First, when the control section 16 (see Fig. 3) receives data from an external apparatus and the like, the control section 16 converts data (that is, three-dimensional data) of the three-dimensional object V (the shaping object VM and the support portion VN) included in the data into data (that is, two-dimensional data) of multiple layers LR (see Fig. 1).

Subsequently, the control section 16 causes the working section driving unit 110 to control the working section main body 120 and to move the working section main body 120 in the negative A-direction such that the shaping section main body 210 is moved relatively with respect to the workbench 122 in the positive A-direction. Subsequently, the droplets DA (model material) and the droplets DB (support material) are ejected from the model material ejecting head 22A and the support material ejecting head 22B of the first ejecting unit 22 configured to be included in the shaping section main body 210. The control section 16 causes the first irradiating unit 54 to irradiate the applied droplets DA (model material) and the applied droplets DB (support material) with the irradiation light LB. When the droplets DA and the droplets DB are applied to the base surface 122A of the workbench 122 and are moved to locations below the first irradiating unit 54, the droplets DA and the droplets DB are irradiated with the irradiation light LB, thereby being cured. After the droplets DA and the droplets DB pass through, radiation of the irradiation light LB stops.

In the present exemplary embodiment, since radiation is performed once, the droplets DA and DB are not completely cured after being subjected to curing, and are thereby in a semi-cured state. Minute irregularity is generated on surfaces of the semi-cured droplets DA and DB before radiation (before curing). The minute irregularity on the surfaces of the droplets DA and DB in a semi-cured state after radiation is flattened by the flattening roller 46 which moves relatively in the positive A-direction while rotating in the R-direction. Specifically, the minute irregularity is pressed by the flattening roller 46, thereby being evenly flattened.

Subsequently, as illustrated in Fig. 4A, the control section 16 causes the model material ejecting head 24A and the support material ejecting head 24B of the second ejecting unit 24 to eject the droplets DA (model material) and the droplets DB (support material) in accordance with a relative movement of the shaping section main body 210 in the positive A-direction (forward direction). The ejected droplets DA and the ejected droplets DB are applied to the base surface 122A of the workbench 122.

As illustrated in Fig. 4A, while the second ejecting unit 24 is moving on the inside of the light shielding wall 128 of the workbench 122, the irradiation light LA1 is not radiated from the second irradiating unit 51.

As illustrated in Fig. 4B, when the second ejecting unit 24 moves near a location outside the light shielding wall 128 in the positive A-direction and stops for a reversal operation, the irradiation light LA1 is radiated from the second irradiating unit 51.

The control section 16 controls the rotary device 57 and rotates the second irradiating unit 51 in the negative A-direction, that is, a direction in which an emission surface 51A emitting the irradiation light LA1 is separated from the second ejecting unit 24. The control section 16 performs scanning of the applied droplets DA and the applied droplets DB with the irradiation light LA1. After scanning is performed, the second irradiating unit 51 is rotated in the positive A-direction and is returned to the original position. When the second irradiating unit 51 is rotated in the positive A-direction, the irradiation light LA1 may be radiated.

The droplets DA and the droplets DB are irradiated with the irradiation light LA1 from the second irradiating unit 51, thereby being cured. Accordingly, a layer LR1 (first layer) is formed through scanning in one direction (positive A-direction).

Before performing radiation, the light shielding shutter 41 is moved until a lower end portion 41A is positioned on a side lower than the upper end portion 128A of the light shielding wall 128.

A layer LR2 (second layer) is formed after the workbench 122 is lowered as much as the thickness of the layer LR while performing an operation of forming the above-described layer LR1 (first layer) by moving the shaping section main body 210 relatively with respect to the workbench 122 in the negative A-direction (backward direction).

In other words, the control section 16 causes the working section main body 120 to move in the positive A-direction such that the shaping section main body 210 is moved relatively with respect to the workbench 122 in the negative A-direction. Subsequently, the droplets DA (model material) and the droplets DB (support material) are ejected from the model material ejecting head 24A and the support material ejecting head 24B of the second ejecting unit 24 configured to be included in the shaping section main body 210.

Irregularity which is significantly undulating due to unevenness of the droplets or the like is generated on the surfaces of the droplets DA and DB applied on the layer LR1 (first layer). The significantly undulating irregularity generated before performing radiation is flattened by the flattening roller 46 which moves in the negative A-direction while rotating in the R-direction. Specifically, the irregularity (precisely, convex portions of the irregularity) is attached to the flattening roller 46, thereby being flattened. The droplets DA and DB which are attached to the flattening roller 46 are scraped by a scraper (not illustrated), are removed, and are collected by a collecting mechanism unit (not illustrated).

The control section 16 causes the first irradiating unit 54 to irradiate the applied droplets DA (model material) and the applied droplets DB (support material) with the irradiation light LB. When the droplets DA and the droplets DB are applied to the layer LR1 (first layer) and are moved to locations below the irradiator unit 50, the droplets DA and the droplets DB are irradiated with the irradiation light LB, thereby being cured. After the droplets DA and the droplets DB pass through, radiation of the irradiation light LB stops.

Subsequently, as illustrated in Fig. 5A, the control section 16 causes the model material ejecting head 22A and the support material ejecting head 22B of the first ejecting unit 22 to eject the droplets DA (model material) and the droplets DB (support material) in accordance with a relative movement of the shaping section main body 210 in the negative A-direction (backward direction). The ejected droplets DA and the ejected droplets DB are applied to the layer LR1 (first layer).

As illustrated in Fig. 5B, when the second ejecting unit 24 moves near a location outside the light shielding wall 128 in the negative A-direction and stops for a reversal operation, the irradiation light LA2 is radiated from the second irradiating unit 52.

The control section 16 controls a rotary device 58 and rotates the second irradiating unit 52 in the positive A-direction, that is, a direction in which an emission surface 52A emitting the irradiation light LA2 is separated from the second ejecting unit 24. The control section 16 performs scanning of the applied droplets DA and the applied droplets DB with the irradiation light LA2. After scanning is performed, the second irradiating unit 52 is rotated in the negative A-direction and is returned to the original position. When the second irradiating unit 52 is rotated in the negative A-direction, the irradiation light LA2 may be radiated.

The droplets DA and the droplets DB are irradiated with the irradiation light LA2 from the second irradiating unit 52, thereby being cured. Accordingly, the layer LR2 (second layer) is formed through scanning in one direction (negative A-direction).

Before performing radiation, the light shielding shutter 42 is moved until a lower end portion 42A is positioned on a side lower than the upper end portion 128A of the light shielding wall 128.

The layers LR for the third and succeeding layers are formed by repeating an operation similar to the above-described operations of forming the layer LR1 (first layer) and the layer LR2 (second layer).

Ejecting the droplets DA and the droplets DB, and curing the droplets DA and the droplets DB performed through radiation of the irradiation light LA1, the irradiation light LA2, and the irradiation light LB are repeated, thereby shaping the three-dimensional object V on the workbench 122 by stacking the layers LR. As described above, the support portion VN is removed from the three-dimensional object V, and then, the shaping object VM having a desired shape is able to be obtained. In the shaping object VM, the support portion VN is not shaped in a case where there is no portion of which a lower portion is an empty space. Therefore, the droplets DB are not ejected from the support material ejecting heads 22B and 24B.

### Operation

Subsequently, an operation of the present exemplary embodiment will be described.

As illustrated in Fig. 4A, when the shaping section main body 210 moves relatively in the positive A-direction, while the second ejecting unit 24 is moving on the inside of the light shielding wall 128 of the workbench 122, the irradiation light LA1 is not radiated from the second irradiating unit 51. Therefore, no reflected light LX1 (see Fig. 4B) of the irradiation light LA1 is generated, and thus, no reflected light LX1 (see Fig. 4B) hits the ejection surface 24C of the second ejecting unit 24.

As illustrated in Fig. 4B, when the second ejecting unit 24 moves near a location outside the light shielding wall 128 in the positive A-direction and stops for a reversal operation, the irradiation light LA1 is radiated from the second irradiating unit 51, and scanning is performed through rotation. Accordingly, the reflected light LX1 is blocked by the light shielding wall 128.

Similarly, as illustrated in Fig. 5A, when the shaping section main body 210 moves in the negative A-direction, while the first ejecting unit 22 is moving on the inside of the light shielding wall 128 of the workbench 122, the irradiation light LA2 is not radiated from the second irradiating unit 52. Therefore, no reflected light LX2 (see Fig. 5B) of the irradiation light LA2 is generated, and thus, no reflected light LX2 (see Fig. 5B) hits the ejection surface 22C of the first ejecting unit 22.

As illustrated in Fig. 5B, when the first ejecting unit 22 moves near a location outside the light shielding wall 128 in the negative A-direction and stops for a reversal operation, the irradiation light LA2 is radiated from the second irradiating unit 52, and scanning is performed through rotation. Accordingly, the reflected light LX1 is blocked by the light shielding wall 128.

Therefore, compared to a case where radiation from the second irradiating units 51 and 52 is performed while the first ejecting unit 22 and the second ejecting unit 24 are moving on the inside of the light shielding wall 128 of the workbench 122 (see a comparative example described below), the intensity of the reflected light LX1 and the reflected light LX2 radiated to the ejection surface 22C of the first ejecting unit 22 and the ejection surface 24C of the second ejecting unit 24 is reduced.

The second irradiating units 51 and 52 rotate in a direction in which the emission surfaces 51A and 52A emitting the irradiation light LA1 and the irradiation light LA2 are separated from the first ejecting unit 22 and the second ejecting unit 24, and the second irradiating units 51 and 52 perform scanning. Therefore, the intensity of the reflected light LX1 and the reflected light LX2 of the irradiation light LA1 and the irradiation light LA2 toward the ejection surfaces 22C and 24C becomes lower compared to a case of rotating in a direction in which the emission surfaces 51A and 52A approach the first ejecting unit 22 and the second ejecting unit 24 and performing scanning.

In this manner, the intensity of the reflected light LX1 and the reflected light LX2 of the irradiation light LA1 and the irradiation light LA2 toward the ejection surfaces 22C and 24C becomes low. Therefore, the shaping liquids on the ejection surfaces 22C and 24C are suppressed or prevented from being cured due to the reflected light LX1 and the reflected light LX2. The intensity of irradiation light LA3 from the first irradiating unit 54 is lower than the intensity of the irradiation light LA1 and the irradiation light LA2 from the second irradiating units 51 and 52. Therefore, the intensity of the reflected light toward the ejection surfaces 22C and 24C is also low.

The intensity of the reflected light LX1 and the reflected light LX2 of the irradiation light LA1 and the irradiation light LA2 toward the ejection surfaces 22C and 24C is low. Therefore, the gap W2 between the second irradiating unit 51 and the second ejecting unit 24, and the gap W2 between the second irradiating unit 52 and the first ejecting unit 22 may be narrowed (see Fig. 2). Moreover, the first ejecting unit 22 and the second ejecting unit 24 may move only near a location outside the light shielding wall 128. Accordingly, a relative moving amount between the shaping section main body 210 and the workbench 122 in the X-direction may be reduced. As a result, the shaping time may be shortened.

Radiation is performed by performing scanning with the irradiation light LA1 and the irradiation light LA2. Therefore, the widths of the emission surfaces 51A and 52A of the second irradiating units 51 and 52 in the moving direction may be narrowed.

Here, the second irradiating units 51 and 52 of the present exemplary embodiment perform radiation by performing scanning of the three-dimensional object V shaped on the workbench 122 with the irradiation light LA1 and the irradiation light LA2 in a state where the first ejecting unit 22 and the second ejecting unit 24 of the ejector unit 20 move to the outside from an inner wall surface 128B of the light shielding wall 128 of the workbench 122 (see Figs. 4B and 5B).

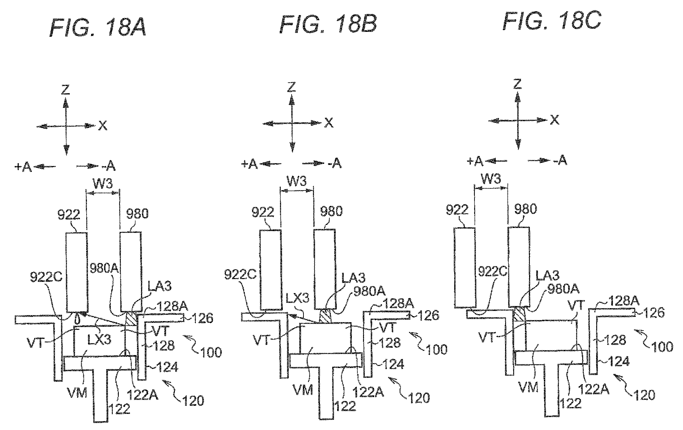

In contrast, in the configuration of the comparative example illustrated in Figs. 18A to 18C, the three-dimensional object V is irradiated in a state where an ejecting unit 922 is positioned on the inside from the inner wall surface of the light shielding wall 128 of the workbench 122.

Accordingly, as illustrated in Figs. 18A and 18B, when the ejecting unit 922 moves on the inside of the light shielding wall 128 of the workbench 122, reflected light LX3 hits an ejection surface 922C of the ejecting unit 922 without being blocked by the light shielding wall 128. Therefore, compared to the present exemplary embodiment, the intensity of the reflected light LX3 becomes significant. Since the intensity of the reflected light LX3 radiated to the ejection surface 922C of the ejecting unit 922 is significant, there is a need to widen the distance between an irradiating unit 980 and the ejecting unit 922. Moreover, unless the ejecting unit 922 moves to a position away from the outside of the light shielding wall 128, the three-dimensional object V in its entirety may not be able to be irradiated. Accordingly, compared to the present exemplary embodiment, a moving amount of the shaping section main body in the X-direction with respect to the workbench 122 increases. As a result, the shaping time is lengthened.

In other words, as in the present exemplary embodiment illustrated in Figs. 4A and 5B, according to the configuration in which radiation is performed by performing scanning with the irradiation light LA1 and the irradiation light LA2 from the second irradiating units 51 and 52, a moving amount of the shaping section main body in the X-direction with respect to the workbench 122 is reduced, and thus, the shaping time is shortened.

As illustrated in Fig. 4B, when moving in the positive A-direction, the second ejecting unit 24 moves near a location outside the light shielding wall 128 in the positive A-direction and stops for a reversal operation. Then, before the irradiation light LA1 is radiated from the second irradiating unit 51, the light shielding shutter 41 is moved until the lower end portion 41A is positioned on a side lower than the upper end portion 128A of the light shielding wall 128. Accordingly, the reflected light LX1 is blocked by the light shielding shutter 41.

Similarly, as illustrated in Fig. 5B, when moving in the negative A-direction, the first ejecting unit 22 moves near a location outside the light shielding wall 128 in the negative A-direction and stops for a reversal operation. Then, before the irradiation light LA2 is radiated from the second irradiating unit 52, the light shielding shutter 42 is moved until the lower end portion 42A is positioned on a side lower than the upper end portion 128A of the light shielding wall 128. Accordingly, the reflected light LX2 is blocked by the light shielding shutter 42.

When moving in the positive A-direction (forward path), the surfaces of the droplets DA and DB after radiation are flattened by the flattening roller 46. Moreover, when moving in the negative A-direction (backward path), the surfaces of the droplets DA and DB before radiation are flattened by the same flattening roller 46.

Here, it is possible to consider a case where multiple flattening rollers 46 are provided in the carriage CR. Particularly, in a case where multiple ejecting units are included, there are provided multiple flattening rollers 46. For example, in a case where the carriage CR is provided with two flattening rollers such as a flattening roller 46 which performs flattening when moving in the forward direction and another flattening roller 46 which performs flattening when moving in the backward direction, there is a need to control the positional accuracy in the heights of the two flattening rollers 46 with high precision (for example, within 10% of the layer LR), and it is extremely difficult to control the positional accuracy in the heights of the two flattening rollers 46 with high precision. As a result, when two flattening rollers 46 are provided, there is concern that precision in flattening is deteriorated.

However, in the shaping apparatus 10 of the present exemplary embodiment, the carriage CR is provided with only one flattening roller 46. Accordingly, there is no need to align the positions of the heights of multiple flattening rollers 46 with each other. Therefore, compared to a case where multiple flattening rollers 46 are provided in the carriage CR, precision in flattening of a shaping liquid G is improved.

### [Second Exemplary Embodiment]

Subsequently, an image forming apparatus of a second exemplary embodiment of the present invention will be described. The same reference numerals and signs are applied to the same members as those of the first exemplary embodiment, and description will not be repeated. Since only a portion of the shaping section is different from that of the first exemplary embodiment, the different configuration portion in the shaping section will be described.

### Shaping Section

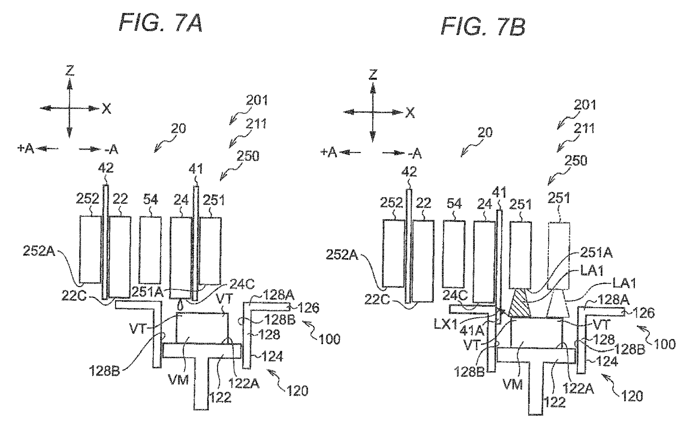

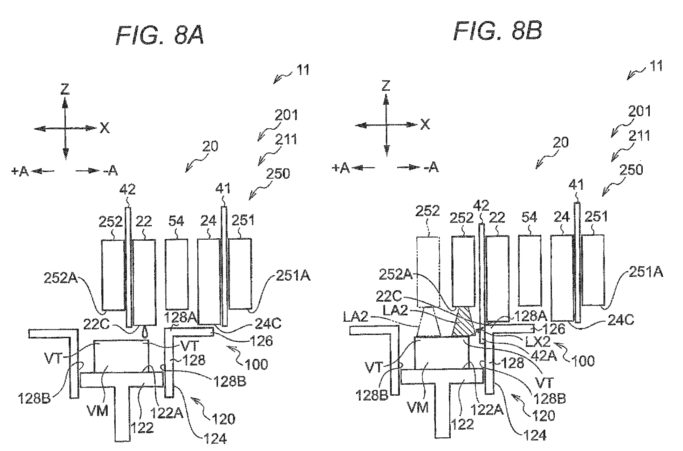

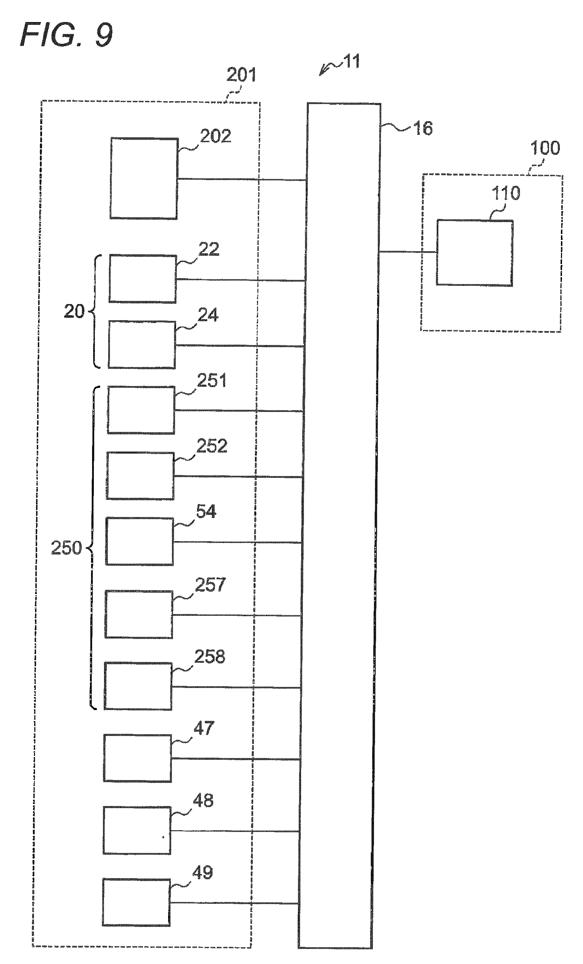

As illustrated in Figs. 7A, 7B, 8A, and 8B, a shaping section 201 of a shaping apparatus 11 of the second exemplary embodiment is configured to include a shaping section main body 211 and the shaping section driving unit 202 (see Fig. 9).

### Shaping Section Main Body

The shaping section main body 211 has the ejector unit 20, an irradiator unit 250, the light shielding shutters 41 and 42, and the flattening roller 46 which is an example of a flattening unit. The ejector unit 20, the irradiator unit 250, the light shielding shutters 41 and 42, and the flattening roller 46 are provided in the carriage CR (see Fig. 1). Accordingly, the ejector unit 20, the irradiator unit 250, the light shielding shutters 41 and 42, and the flattening roller 46 configured to be included in the shaping section main body 211 are integrated and move relatively with respect to the workbench 122.

### Irradiator Unit

As illustrated in Figs. 7A, 7B, 8A, and 8B, the irradiator unit 250 is configured to radiate the irradiation light LA1, the irradiation light LA2, and the irradiation light LB from the first irradiating unit 54 and second irradiating units 251 and 252 which are examples of the irradiating unit toward the base surface 122A of the workbench 122 from one end side to the other end side in the longitudinal direction (Y-direction). The applied droplets DA (model material) and the applied droplets DB (support material) are cured by being irradiated with the irradiation light LA1, the irradiation light LA2, and the irradiation light LB. The irradiation light LB (not illustrated) is similar to that of the first exemplary embodiment.

### First Irradiating Unit

The first irradiating unit 54 has a configuration similar to that of the first exemplary embodiment.

### Second Irradiating Unit

The second irradiating unit 251 which is an example of the irradiating unit is configured to be moved in the X-direction by a movement device 257 (see Fig. 9) provided in the carriage CR (see Fig. 7B). Similarly, the second irradiating unit 252 which is an example of the irradiating unit is configured to be moved in the X-direction by a movement device 258 (see Fig. 9) provided in the carriage CR (see Fig. 8B).

### Method of Shaping Three-dimensional Object

Subsequently, an example of a method of shaping the three-dimensional object V (shaping object VM) performed by the shaping apparatus 11 of the exemplary embodiment will be described. Since the flattening roller 46 is configured to be similar to that of the first exemplary embodiment, description thereof will not be given.

First, when the control section 16 (see Fig. 9) receives data from an external apparatus and the like, the control section 16 converts data (that is, three-dimensional data) of the three-dimensional object V (the shaping object VM and the support portion VN) included in the data into data (that is, two-dimensional data) of multiple layers LR (see Fig. 1).

Subsequently, the control section 16 causes the working section driving unit 110 to control the working section main body 120 and to move the working section main body 120 in the negative A-direction such that the shaping section main body 211 is moved relatively with respect to the workbench 122 in the positive A-direction. Subsequently, the droplets DA (model material) and the droplets DB (support material) are ejected from the model material ejecting head 22A and the support material ejecting head 22B of the first ejecting unit 22 configured to be included in the shaping section main body 211. The control section 16 causes the first irradiating unit 54 to irradiate the applied droplets DA (model material) and the applied droplets DB (support material) with the irradiation light LB. When the droplets DA and the droplets DB are applied to the base surface 122A of the workbench 122 and are moved to locations below the first irradiating unit 54, the droplets DA and the droplets DB are irradiated with the irradiation light LB, thereby being cured. After the droplets DA and the droplets DB pass through, radiation of the irradiation light LB stops.

Subsequently, as illustrated in Fig. 7A, the control section 16 causes the model material ejecting head 24A and the support material ejecting head 24B of the second ejecting unit 24 to eject the droplets DA (model material) and the droplets DB (support material) in accordance with a relative movement of the shaping section main body 211 in the positive A-direction (forward direction). The ejected droplets DA and the ejected droplets DB are applied to the base surface 122A of the workbench 122.

As illustrated in Fig. 7A, while the second ejecting unit 24 is moving on the inside of the light shielding wall 128 of the workbench 122, the irradiation light LA1 is not radiated from the second irradiating unit 251.

As illustrated in Fig. 7B, when the second ejecting unit 24 moves near a location outside the light shielding wall 128 in the positive A-direction and stops for a reversal operation, the irradiation light LA1 is radiated from the second irradiating unit 251.

The control section 16 controls the movement device 257 so as to move the second irradiating unit 251 in the negative A-direction, thereby performing scanning of the applied droplets DA and the applied droplets DB with the irradiation light LA1. After scanning is performed, the second irradiating unit 251 moves in the positive A-direction and returns to the original position. When the second irradiating unit 251 moves in the positive A-direction, the irradiation light LA1 may be radiated.

Otherwise, the second irradiating unit 251 indicated by the imaginary line may be configured to be positioned outside in the positive A-direction and to move from the position to a position inside in the negative A-direction indicated by the solid line.

The droplets DA and the droplets DB are irradiated with the irradiation light LA1 from the second irradiating unit 251, thereby being cured. Accordingly, the layer LR1 (first layer) is formed through scanning in one direction (positive A-direction).

Before performing radiation, the light shielding shutter 41 is moved until the lower end portion 41 A is positioned on a side lower than the upper end portion 128A of the light shielding wall 128.

The layer LR2 (second layer) is formed after the workbench 122 is lowered as much as the thickness of the layer LR while performing an operation of forming the above-described layer LR1 (first layer) by moving the shaping section main body 211 relatively with respect to the workbench 122 in the negative A-direction (backward direction).

In other words, the control section 16 causes the working section main body 120 to move in the positive A-direction such that the shaping section main body 211 is moved relatively with respect to the workbench 122 in the negative A-direction. Subsequently, the droplets DA (model material) and the droplets DB (support material) are ejected from the model material ejecting head 24A and the support material ejecting head 24B of the second ejecting unit 24 configured to be included in the shaping section main body 211.

The control section 16 causes the first irradiating unit 54 to irradiate the applied droplets DA (model material) and the applied droplets DB (support material) with the irradiation light LB. When the droplets DA and the droplets DB are applied to the layer LR1 (first layer) and are moved to locations below the irradiator unit 250, the droplets DA and the droplets DB are irradiated with the irradiation light LB, thereby being cured. After the droplets DA and the droplets DB pass through, radiation of the irradiation light LB stops.

Subsequently, as illustrated in Fig. 8A, the control section 16 causes the model material ejecting head 22A and the support material ejecting head 22B of the first ejecting unit 22 to eject the droplets DA (model material) and the droplets DB (support material) in accordance with a relative movement of the shaping section main body 211 in the negative A-direction (backward direction). The ejected droplets DA and the ejected droplets DB are applied to the layer LR1 (first layer).

As illustrated in Fig. 8B, when the second ejecting unit 24 moves near a location outside the light shielding wall 128 in the negative A-direction and stops for a reversal operation, the irradiation light LA2 is radiated from the second irradiating unit 252.

The control section 16 controls the movement device 258 so as to move the second irradiating unit 252 in the positive A-direction, thereby performing scanning of the applied droplets DA and the applied droplets DB with the irradiation light LA2. After scanning is performed, the second irradiating unit 252 moves in the negative A-direction and returns to the original position. When the second irradiating unit 252 moves in the negative A-direction, the irradiation light LA2 may be radiated.

The droplets DA and the droplets DB are irradiated with the irradiation light LA2 from the second irradiating unit 252, thereby being cured. Accordingly, the layer LR2 (second layer) is formed through scanning in one direction (negative A-direction).

Before performing radiation, the light shielding shutter 42 is moved until the lower end portion 42A is positioned on a side lower than the upper end portion 128A of the light shielding wall 128.

The layers LR for the third and succeeding layers are formed by repeating an operation similar to the above-described operations of forming the layer LR1 (first layer) and the layer LR2 (second layer).

Ejecting the droplets DA and the droplets DB, and curing the droplets DA and the droplets DB performed through radiation of the irradiation light LA1, the irradiation light LA2, and the irradiation light LB are repeated, thereby shaping the three-dimensional object V on the workbench 122 by stacking the layers LR. As described above, the support portion VN is removed from the three-dimensional object V, and then, the shaping object VM having a desired shape is able to be obtained. In the shaping object VM, the support portion VN is not shaped in a case where there is no portion of which a lower portion is an empty space. Therefore, the droplets DB are not ejected from the support material ejecting heads 22B and 24B.

### Operation

Subsequently, an operation of the present exemplary embodiment will be described.

As illustrated in Fig. 7A, when the shaping section main body 210 moves relatively in the positive A-direction, while the second ejecting unit 24 is moving on the inside of the light shielding wall 128 of the workbench 122, the irradiation light LA1 is not radiated from the second irradiating unit 251. Therefore, no reflected light LX1 (see Fig. 7B) of the irradiation light LA1 is generated, and thus, no reflected light LX1 (see Fig. 7B) hits the ejection surface 24C of the second ejecting unit 24.

As illustrated in Fig. 7B, when the second ejecting unit 24 moves near a location outside the light shielding wall 128 in the positive A-direction and stops for a reversal operation, the irradiation light LA1 is radiated from the second irradiating unit 251, and scanning is performed through movement. Accordingly, the reflected light LX1 is blocked by the light shielding wall 128.

Similarly, as illustrated in Fig. 8A, when the shaping section main body 210 moves in the negative A-direction, while the first ejecting unit 22 is moving on the inside of the light shielding wall 128 of the workbench 122, the irradiation light LA2 is not radiated from the second irradiating unit 252. Therefore, no reflected light LX2 (see Fig. 8B) of the irradiation light LA2 is generated, and thus, no reflected light LX2 (see Fig. 8B) hits the ejection surface 22C of the first ejecting unit 22.

As illustrated in Fig. 8B, when the first ejecting unit 22 moves near a location outside the light shielding wall 128 in the negative A-direction and stops for a reversal operation, the irradiation light LA2 is radiated from the second irradiating unit 252, and scanning is performed through movement. Accordingly, the reflected light LX2 is blocked by the light shielding wall 128.

Therefore, compared to a case where radiation from the second irradiating units 251 and 252 is performed while the first ejecting unit 22 and the second ejecting unit 24 are moving on the inside of the light shielding wall 128 of the workbench 122 (see the comparative example described above), the intensity of the reflected light LX1 and the reflected light LX2 radiated to the ejection surface 22C of the first ejecting unit 22 and the ejection surface 24C of the second ejecting unit 24 is reduced.

The intensity of the reflected light LX1 and the reflected light LX2 of the irradiation light LA1 and the irradiation light LA2 toward the ejection surfaces 22C and 24C is low. Therefore, a distance between the second irradiating unit 51 and the second ejecting unit 24, and a distance between the second irradiating unit 52 and the first ejecting unit 22 may be narrowed. Moreover, the first ejecting unit 22 and the second ejecting unit 24 may move only near a location outside the light shielding wall 128. Accordingly, a relative moving amount between the shaping section main body 210 and the workbench 122 in the X-direction may be reduced. As a result, the shaping time may be shortened.

Radiation is performed by performing scanning with the irradiation light LA1 and the irradiation light LA2. Therefore, the widths of emission surfaces 251A and 252A of the second irradiating units 251 and 252 in the moving direction may be narrowed.

Since other operations of the light shielding shutters 41 and 42, the flattening roller, and the like are similar to those of the first exemplary embodiment, description thereof will not be given.

### [Third Exemplary Embodiment]

Subsequently, an image forming apparatus of a third exemplary embodiment of the present invention will be described. The same reference numerals and signs are applied to the same members as those of the first exemplary embodiment, and description will not be repeated. Since only a portion of the shaping section is different from that of the first exemplary embodiment, the different configuration portion in the shaping section will be described.

### Shaping Section

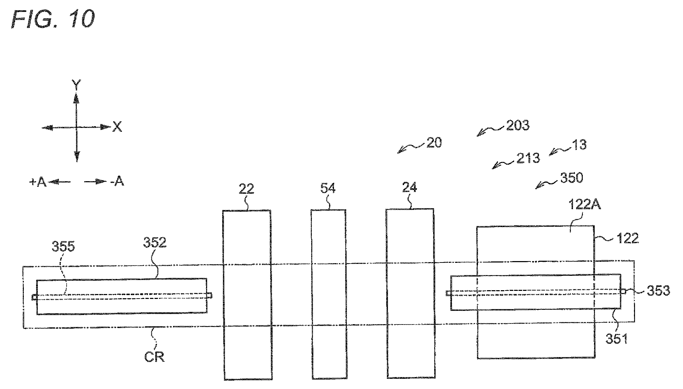

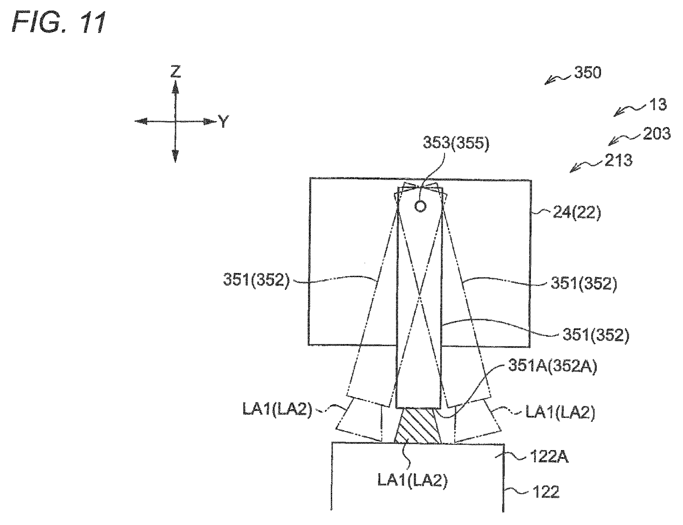

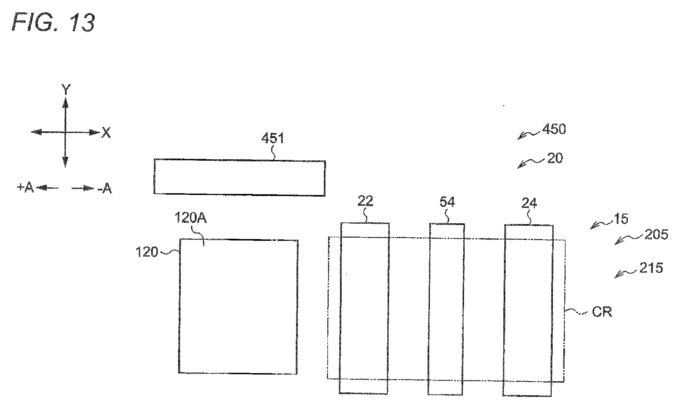

As illustrated in Figs. 10 and 11, a shaping section 203 of a shaping apparatus 13 of the third exemplary embodiment is configured to include a shaping section main body 213 and the shaping section driving unit 202 (see Fig. 13).

### Shaping Section Main Body

As illustrated in Fig. 10, the shaping section main body 213 has the ejector unit 20 and an irradiator unit 350. The shaping section main body 213 also has the light shielding shutters 41 and 42, and the flattening roller 46 which is an example of the flattening unit (not illustrated). The ejector unit 20, the irradiator unit 350, the light shielding shutters 41 and 42, and the flattening roller 46 are provided in the carriage CR (see Fig. 10). Accordingly, the ejector unit 20, the irradiator unit 350, the light shielding shutters 41 and 42, and the flattening roller 46 configured to be included in the shaping section main body 213 are integrated and move relatively with respect to the workbench 122.

### Irradiator Unit

As illustrated in Fig. 11, the irradiator unit 350 is configured to radiate the irradiation light LA1 and the irradiation light LA2 toward the base surface 122A of the workbench 122 from second irradiating units 351 and 352 which are examples of the irradiating unit. The first irradiating unit 54 is also configured to radiate (not illustrated) the irradiation light LB (see Fig. 1 and the like). The applied droplets DA (model material) and the applied droplets DB (support material) are cured by being irradiated with the irradiation light LA1, the irradiation light LA2, and the irradiation light LB.

### First Irradiating Unit

The first irradiating unit 54 has a configuration similar to that of the first exemplary embodiment.

### Second Irradiating Unit

As illustrated in Fig. 10, the second irradiating unit 351 and the second irradiating unit 352 which are examples of the irradiating unit have structures similar to each other except that the disposed positions are different from each other. The second irradiating unit 351 and the second irradiating unit 352 are elongated and are disposed while having the longitudinal directions along the X-direction which is the moving direction. The second irradiating unit 352 on one side is disposed outside the first ejecting unit 22 in the X-direction (outside in the positive A-direction), and the second irradiating unit 351 on the other side is disposed outside the second ejecting unit 24 in the X-direction (outside in the negative A-direction)

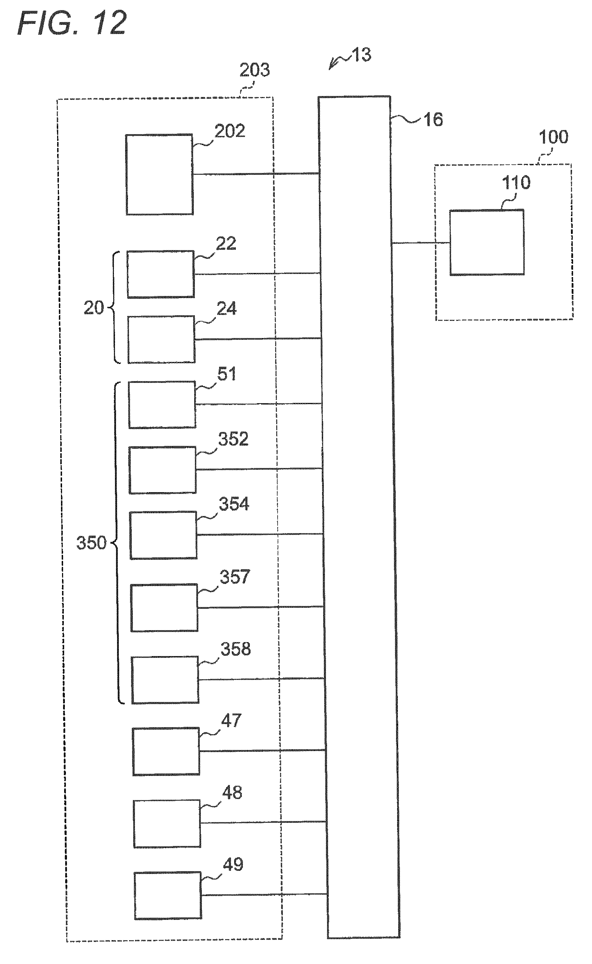

As illustrated in Fig. 11, the second irradiating unit 351 is configured to rotate in the Y-direction about a rotary axis 353 along the X-direction by a rotary device 357 (see Fig. 12). Similarly, the second irradiating unit 352 is configured to rotate in the Y-direction about a rotary axis 355 along the X-direction by a rotary device 358 (see Fig. 12) provided in the carriage CR.

### Method of Shaping Three-dimensional Object

Subsequently, an example of a method of shaping the three-dimensional object V (shaping object VM) performed by the shaping apparatus 13 of the present exemplary embodiment will be described. The flattening roller 46 will not be described. The light shielding shutters 41 and 42 (not illustrated) will be described similar to those of the first exemplary embodiment and the second exemplary embodiment.

The control section 16 causes the working section driving unit 110 to control the working section main body 120 and to move the working section main body 120 in the negative A-direction such that the shaping section main body 213 is moved relatively with respect to the workbench 122 in the positive A-direction. Subsequently, the droplets DA (model material) and the droplets DB (support material) are ejected from the model material ejecting head 22A and the support material ejecting head 22B of the first ejecting unit 22 configured to be included in the shaping section main body 213. The control section 16 causes the first irradiating unit 54 to irradiate the applied droplets DA (model material) and the applied droplets DB (support material) with the irradiation light LB. When the droplets DA and the droplets DB are applied to the base surface 122A of the workbench 122 and are moved to locations below the first irradiating unit 54, the droplets DA and the droplets DB are irradiated with the irradiation light LB, thereby being cured. After the droplets DA and the droplets DB pass through, radiation of the irradiation light LB stops.

Subsequently, the control section 16 causes the model material ejecting head 24A and the support material ejecting head 24B of the second ejecting unit 24 to eject the droplets DA (model material) and the droplets DB (support material) in accordance with a relative movement of the shaping section main body 213 in the positive A-direction (forward direction). The ejected droplets DA and the ejected droplets DB are applied to the base surface 122A of the workbench 122.

While the second ejecting unit 24 is moving on the inside of the light shielding wall 128 of the workbench 122, the irradiation light LA1 is not radiated from the second irradiating unit 351.

When the second ejecting unit 24 moves near a location outside the light shielding wall 128 in the positive A-direction and stops for a reversal operation, as illustrated in Fig. 11, the irradiation light LA1 is radiated from the second irradiating unit 351.

The control section 16 controls the rotary device 357 so as to move the second irradiating unit 351 in the Y-direction and performs scanning of the applied droplets DA and the applied droplets DB with the irradiation light LA1.

The droplets DA and the droplets DB are irradiated with the irradiation light LA1 from the second irradiating unit 351, thereby being cured. Accordingly, the layer LR1 (first layer) is formed through scanning in one direction (positive A-direction).

Before performing radiation, the light shielding shutter 41 is moved until the lower end portion 41 A is positioned on a side lower than the upper end portion 128A of the light shielding wall 128.

The layer LR2 (second layer) is formed after the workbench 122 is lowered as much as the thickness of the layer LR while performing an operation of forming the above-described layer LR1 (first layer) by moving the shaping section main body 210 relatively with respect to the workbench 122 in the negative A-direction (backward direction).

In other words, the control section 16 causes the working section main body 120 to move in the positive A-direction such that the shaping section main body 213 is moved relatively with respect to the workbench 122 in the negative A-direction. Subsequently, the droplets DA (model material) and the droplets DB (support material) are ejected from the model material ejecting head 24A and the support material ejecting head 24B of the second ejecting unit 24 configured to be included in the shaping section main body 213.

The control section 16 causes the first irradiating unit 54 to irradiate the applied droplets DA (model material) and the applied droplets DB (support material) with the irradiation light LB. When the droplets DA and the droplets DB are applied to the layer LR1 (first layer) and are moved to locations below the irradiator unit 50, the droplets DA and the droplets DB are irradiated with the irradiation light LB, thereby being cured. After the droplets DA and the droplets DB pass through, radiation of the irradiation light LB stops.

Subsequently, the control section 16 causes the model material ejecting head 22A and the support material ejecting head 22B of the first ejecting unit 22 to eject the droplets DA (model material) and the droplets DB (support material) in accordance with a relative movement of the shaping section main body 213 in the negative A-direction (backward direction). The ejected droplets DA and the ejected droplets DB are applied to the layer LR1 (first layer).

When the second ejecting unit 24 moves near a location outside the light shielding wall 128 in the positive A-direction and stops for a reversal operation, the irradiation light LA2 is radiated from the second irradiating unit 352.

As illustrated in Fig. 11, the control section 16 controls the rotary device 358 so as to rotate the second irradiating unit 352 in the Y-direction and performs scanning of the applied droplets DA and the applied droplets DB with the irradiation light LA2.

The droplets DA and the droplets DB are irradiated with the irradiation light LA2 from the second irradiating unit 352, thereby being cured. Accordingly, the layer LR2 (second layer) is formed through scanning in one direction (negative A-direction).

Before performing radiation, the light shielding shutter 42 is moved until the lower end portion 42A is positioned on a side lower than the upper end portion 128A of the light shielding wall 128.

The layers LR for the third and succeeding layers are formed by repeating an operation similar to the above-described operations of forming the layer LR1 (first layer) and the layer LR2 (second layer).

Ejecting the droplets DA and the droplets DB, and curing the droplets DA and the droplets DB performed through radiation of the irradiation light LA1, the irradiation light LA2, and the irradiation light LB are repeated, thereby shaping the three-dimensional object V on the workbench 122 by stacking the layers LR. As described above, the support portion VN is removed from the three-dimensional object V, and then, the shaping object VM having a desired shape is able to be obtained. In the shaping object VM, the support portion VN is not shaped in a case where there is no portion of which a lower portion is an empty space. Therefore, the droplets DB are not ejected from the support material ejecting heads 22B and 24B.

### Operation

Subsequently, an operation of the present exemplary embodiment will be described.
while the second ejecting unit 24 is moving on the inside of the light shielding wall 128 of the workbench 122, the irradiation light LA1 and the irradiation light LA2 are not radiated from the second irradiating units 351 and 352. Therefore, the reflected light LX1 and the reflected light LX2 of the irradiation light LA1 and the irradiation light LA2 are not generated, and thus, the reflected light LX1 and the reflected light LX2 do not hit the ejection surface 24C of the second ejecting unit 24.

As illustrated in Fig. 11, when the first ejecting unit 22 and the second ejecting unit 24 move near locations outside the light shielding wall 128 in the negative A-direction or the positive A-direction and stops for a reversal operation, the irradiation light LA1 and the irradiation light LA2 are radiated from the second irradiating units 351 and 352, and scanning is performed through rotation in the Y-direction. Accordingly, the reflected light LX1 and the reflected light LX2 of e irradiation light LA1 and the irradiation light LA2 are blocked by the light shielding wall 128.

Therefore, compared to a case where radiation from the second irradiating units 51 and 52 is performed while the first ejecting unit 22 and the second ejecting unit 24 are moving on the inside of the light shielding wall 128 of the workbench 122 (see the comparative example described above), the intensity of the reflected light LX1 and the reflected light LX2 radiated to the ejection surface 22C of the first ejecting unit 22 and the ejection surface 24C of the second ejecting unit 24 is reduced.

The irradiation light LA1 and the irradiation light LA2 are radiated from the second irradiating units 351 and 352, and scanning is performed through rotation in the Y-direction. Therefore, the widths of emission surfaces 351A and 352A of the second irradiating units 351 and 352 in the Y-direction may be narrowed.

Since other operations of the light shielding shutters 41 and 42, the flattening roller, and the like are similar to those of the first exemplary embodiment, description thereof will not be given.

### [Fourth Exemplary Embodiment]

Subsequently, an image forming apparatus of a fourth exemplary embodiment of the present invention will be described. The same reference numerals and signs are applied to the same members as those of the first exemplary embodiment, and description will not be repeated. Since only a portion of the shaping section is different from that of the first exemplary embodiment, the different configuration portion in the shaping section will be described.

### Shaping Section

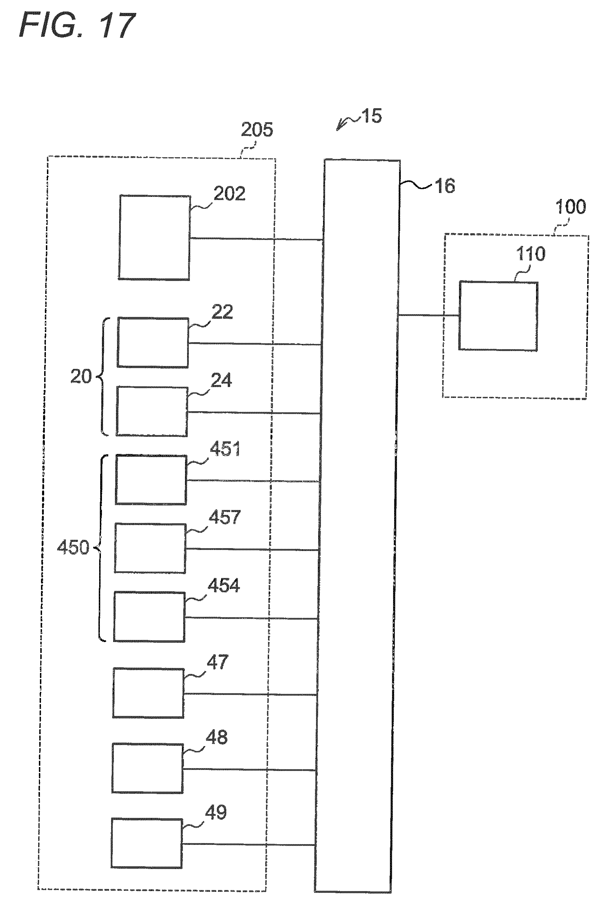

As illustrated in Figs. 13 to 15, a shaping section 205 of a shaping apparatus 15 of the fourth exemplary embodiment is configured to include a shaping section main body 215 and the shaping section driving unit 202 (see Fig. 17).

### Shaping Section Main Body

The shaping section main body 215 has the ejector unit 20 and an irradiator unit 450. The shaping section main body 215 also has the light shielding shutters 41 and 42, and the flattening roller 46 which is an example of the flattening unit (not illustrated). The ejector unit 20, the first irradiating unit 54 of the irradiator unit 450, the light shielding shutters 41 and 42, and the flattening roller 46 are provided in the carriage CR. Accordingly, the ejector unit 20, the first irradiating unit 54 of the irradiator unit 450, the light shielding shutters 41 and 42, and the flattening roller 46 configured to be included in the shaping section main body 215 are integrated and move relatively with respect to the workbench 122. However, as described below, a second irradiating unit 451 of the irradiator unit 450 is configured to move by being integrated with the workbench 122.

### Irradiator Unit

The irradiator unit 450 is configured to radiate the irradiation light LB from the first irradiating unit 54 and the irradiation light LA from the second irradiating unit 451 which is an example of the irradiating unit toward the base surface 122A of the workbench 122 (see Fig. 1 and the like). The applied droplets DA (model material) and the applied droplets DB (support material) are cured by being irradiated with the irradiation light LA and the irradiation light LB.

### First Irradiating Unit

The first irradiating unit 54 has a configuration similar to that of the first exemplary embodiment.

### Second Irradiating Unit

The second irradiating unit 451 which is an example of the irradiating unit is elongated and is disposed while having the longitudinal direction along the X-direction which is the moving direction. The second irradiating unit 451 is not provided in the carriage CR and is configured to move in the X-direction together with the workbench 122.

However, the second irradiating unit 451 is disposed outside the workbench 122 of the working section main body 120 in the Y-direction. Therefore, even though the second irradiating unit 451 moves in the X-direction together with the workbench 122, the ejector unit 20 and the first irradiating unit 54 do not interfere with each other.

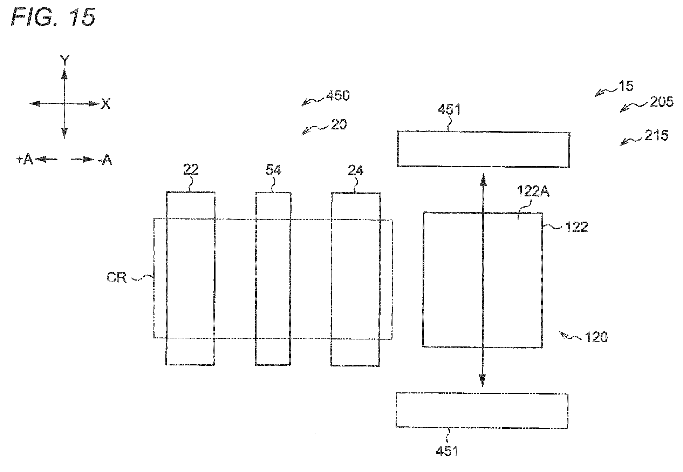

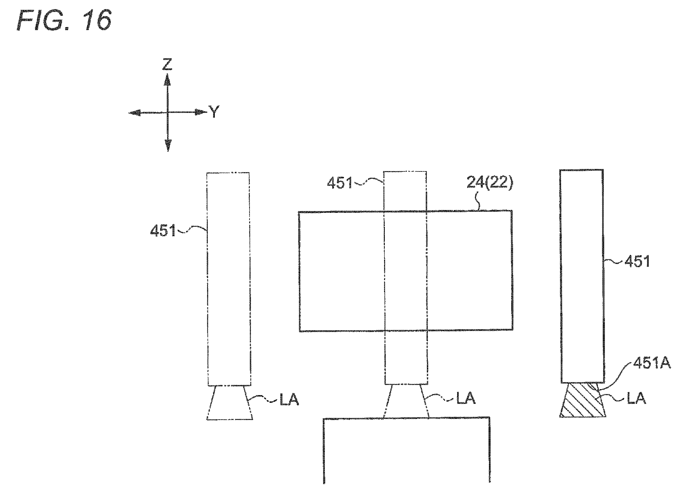

Moreover, as illustrated in Figs. 15 and 16, the second irradiating unit 451 is configured to move reciprocally in the Y-direction above the workbench 122 by a movement device 457 (see Fig. 17).

### Method of Shaping Three-dimensional Object

Subsequently, an example of a method of shaping the three-dimensional object V (shaping object VM) performed by the shaping apparatus 15 of the present exemplary embodiment will be described. The flattening roller 46 will not be described. The light shielding shutters 41 and 42 (not illustrated) will be described similar to those of the first exemplary embodiment and the second exemplary embodiment.

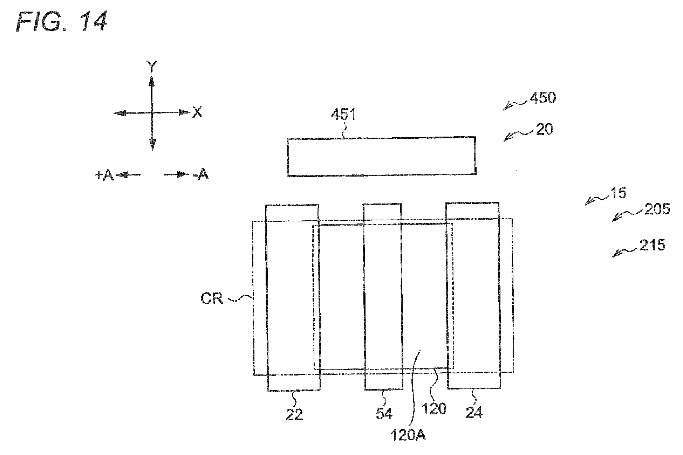

As illustrated in Figs. 13 and 14, the control section 16 causes the working section driving unit 110 to control the working section main body 120 and to move the working section main body 120 in the negative A-direction such that the shaping section main body 215 is moved relatively with respect to the workbench 122 in the positive A-direction.

Subsequently, when the model material ejecting head 22A and the support material ejecting head 22B of the first ejecting unit 22 configured to be included in the shaping section main body 215 move above the workbench 122, the droplets DA (model material) and the droplets DB (support material) are ejected.

The control section 16 causes the first irradiating unit 54 to irradiate the applied droplets DA (model material) and the applied droplets DB (support material) with the irradiation light LB. When the droplets DA and the droplets DB are applied to the base surface 122A of the workbench 122 and are moved to locations below the first irradiating unit 54, the droplets DA and the droplets DB are irradiated with the irradiation light LB, thereby being cured. After the droplets DA and the droplets DB pass through, radiation of the irradiation light LB stops.

Subsequently, the control section 16 causes the model material ejecting head 24A and the support material ejecting head 24B of the second ejecting unit 24 to eject the droplets DA (model material) and the droplets DB (support material) in accordance with a relative movement of the shaping section main body 215 in the positive A-direction (forward direction). The ejected droplets DA and the ejected droplets DB are applied to the base surface 122A of the workbench 122.

When the second ejecting unit 24 moves near a location outside the light shielding wall 128 in the positive A-direction and stops for a reversal operation, as illustrated in Figs. 15 and 16, the irradiation light LA is radiated from the second irradiating unit 451. The control section 16 controls the movement device 457 (see Fig. 17) so as to move the second irradiating unit 451 in the Y-direction and performs scanning of the applied droplets DA and the applied droplets DB with the irradiation light LA.

The droplets DA and the droplets DB are irradiated with the irradiation light LA from the second irradiating unit 451, thereby being cured. Accordingly, the layer LR1 (first layer) is formed through scanning in one direction (positive A-direction).

Before performing radiation, the light shielding shutter 41 is moved until the lower end portion 41A is positioned on a side lower than the upper end portion 128A of the light shielding wall 128.

The layer LR2 (second layer) is formed after the workbench 122 is lowered as much as the thickness of the layer LR while performing an operation of forming the above-described layer LR1 (first layer) by moving the shaping section main body 215 relatively with respect to the workbench 122 in the negative A-direction (backward direction).

In other words, the control section 16 causes the working section main body 120 to move in the positive A-direction such that the shaping section main body 215 is moved relatively with respect to the workbench 122 in the negative A-direction. Subsequently, the droplets DA (model material) and the droplets DB (support material) are ejected from the model material ejecting head 24A and the support material ejecting head 24B of the second ejecting unit 24 configured to be included in the shaping section main body 215.

The control section 16 causes the first irradiating unit 54 to irradiate the applied droplets DA (model material) and the applied droplets DB (support material) with the irradiation light LB. When the droplets DA and the droplets DB are applied to the layer LR1 (first layer) and are moved to locations below the first irradiating unit 54, the droplets DA and the droplets DB are irradiated with the irradiation light LB, thereby being cured. After the droplets DA and the droplets DB pass through, radiation of the irradiation light LB stops.

Subsequently, the control section 16 causes the model material ejecting head 22A and the support material ejecting head 22B of the first ejecting unit 22 to eject the droplets DA (model material) and the droplets DB (support material) in accordance with a relative movement of the shaping section main body 215 in the negative A-direction (backward direction). The ejected droplets DA and the ejected droplets DB are applied to the layer LR1 (first layer).

When the second ejecting unit 24 moves near a location outside the light shielding wall 128 in the positive A-direction and stops for a reversal operation, the irradiation light LA is radiated from the second irradiating unit 451. The control section 16 controls the movement device 457 so as to move the second irradiating unit 451 in the Y-direction and performs scanning of the applied droplets DA and the applied droplets DB with the irradiation light LA.

The droplets DA and the droplets DB are irradiated with the irradiation light LA from the second irradiating unit 451, thereby being cured. Accordingly, the layer LR2 (second layer) is formed through scanning in one direction (negative A-direction).

Before performing radiation, the light shielding shutter 42 is moved until the lower end portion 42A is positioned on a side lower than the upper end portion 128A of the light shielding wall 128.

The layers LR for the third and succeeding layers are formed by repeating an operation similar to the above-described operations of forming the layer LR1 (first layer) and the layer LR2 (second layer).

Ejecting the droplets DA and the droplets DB, and curing the droplets DA and the droplets DB performed through radiation of the irradiation light LA1, the irradiation light LA2, and the irradiation light LB are repeated, thereby shaping the three-dimensional object V on the workbench 122 by stacking the layers LR. As described above, the support portion VN is removed from the three-dimensional object V, and then, the shaping object VM having a desired shape is able to be obtained. In the shaping object VM, the support portion VN is not shaped in a case where there is no portion of which a lower portion is an empty space. Therefore, the droplets DB are not ejected from the support material ejecting heads 22B and 24B.

### Operation

Subsequently, an operation of the present exemplary embodiment will be described.

When the first ejecting unit 22 and the second ejecting unit 24 move near locations outside the light shielding wall 128 in the negative A-direction or the positive A-direction and stops for a reversal operation, the irradiation light LA is radiated from the second irradiating unit 451 and scanning is performed through movement in the Y-direction. Accordingly, the reflected light of the irradiation light LA is blocked by the light shielding wall 128.

Therefore, compared to a case where radiation from the second irradiating unit 451 is performed while the first ejecting unit 22 and the second ejecting unit 24 are moving on the inside of the light shielding wall 128 of the workbench 122 (see the comparative example described above), the intensity of the reflected light radiated to the ejection surface 22C of the first ejecting unit 22 and the ejection surface 24C of the second ejecting unit 24 is reduced.

Since both radiation during a relative movement of the shaping section main body 215 in the positive A-direction and radiation during a relative movement thereof in the negative A-direction may be able to be performed by one second irradiating unit 451, the required number of irradiating units is reduced. Moreover, a moving amount of the shaping section main body 215 in the X-direction with respect to the workbench 122 is reduced, and thus, the shaping time is shortened.

Since other operations of the light shielding shutters 41 and 42, the flattening roller, and the like are similar to those of the first exemplary embodiment, description thereof will not be given.

### [Others]

The present invention is not limited to the above-described exemplary embodiment.

For example, the second irradiating units 51, 52, 251, 252, 351, 352, and 451 which are examples of the irradiating unit start scanning with the irradiation light after the first ejecting unit 22 or the second ejecting unit 24 which is an example of the ejecting unit is moved to the outside from the light shielding wall 128. However, the exemplary embodiment is not limited thereto. Scanning may start to be performed with the irradiation light before the first ejecting unit 22 or the second ejecting unit 24 is moved to the outside from the light shielding wall 128.

Similarly, the light shielding shutters 41 and 42 may be lowered before the first ejecting unit 22 or the second ejecting unit 24 is moved to the outside from the light shielding wall 128.

For example, the shaping apparatus 15 of the fourth exemplary embodiment has a structure in which both radiation during a relative movement of the shaping section main body 215 in the positive A-direction and radiation during a relative movement thereof in the negative A-direction may be able to be performed by one second irradiating unit 451. However, the exemplary embodiment is not limited thereto. Similar to those of the first exemplary embodiment to the third exemplary embodiment, the exemplary embodiment may have a structure in which the second irradiating units which are disposed and move in the Y-direction while having the longitudinal direction along the X-direction are respectively disposed outside the first ejecting unit 22 in the X-direction (outside in the positive A-direction) and outside the second ejecting unit 24 in the X-direction (outside in the negative A-direction) and are provided in the carriage CR.

For example, the light shielding shutters 41 and 42 and the flattening roller 46 do not have to be provided.

For example, in the configuration of the above-described exemplary embodiment, the first ejecting unit 22 and the second ejecting unit 24 are respectively disposed on both sides next to the first irradiating unit 54, and the second irradiating units 51, 251, and 351 and the second irradiating units 52, 252, and 352 are respectively disposed on the outsides of the second ejecting unit 24 and the first ejecting unit 22. However, the exemplary embodiment is not limited thereto. The exemplary embodiment may be configured to be provided with the first ejecting unit 22 and at least any one of the second irradiating units 51, 251, and 351 and the second irradiating units 52, 252, and 352.

For example, in the above-described exemplary embodiment, the model material and the support material are ultraviolet ray curing-type shaping liquids which are cured by being irradiated with ultraviolet rays. However, the exemplary embodiment is not limited thereto. The model material and the support material may be shaping liquids which are cured by being irradiated with light other than the ultraviolet rays. The irradiator units 50, 250, 350, and 450 appropriately cope with a structure of emitting light which copes with the shaping liquid.

For example, in the above-described exemplary embodiment, the working section main body 120 in its entirety moves in the X-direction, and the workbench 122 moves in the Z-direction, thereby shaping the three-dimensional object V (shaping object VM).However, the exemplary embodiment is not limited thereto. The shaping section main bodies 210, 211, 213, and 215 may move in the X-direction, the Y-direction, and the Z-direction and shape the three-dimensional object V. Otherwise, the shaping section main bodies 210, 211, 213, and 215 may move in the X-direction, and the workbench 122 may move in the Z-direction. The point is that the structure is acceptable as long as the workbench and the shaping section main body move relatively in the X-direction and the Z-direction.

As a configuration of an image forming apparatus, various types of configurations are able to be applied without being limited to the configuration of the above-described exemplary embodiment. Moreover, it is not necessary to mention that various aspects are able to be executed without departing from the gist and scope of the present invention.

## Claims

1. A shaping apparatus comprising:
a bench unit that has a light shielding wall around the bench unit;
an ejecting unit that is moved relatively with respect to the bench unit and ejects a droplet of a light curable shaping liquid toward the bench unit; and
an irradiating unit that performs scanning the ejected droplet on the bench unit with irradiation light to cure the droplet in a state where the ejecting unit is moved to outside from the light shielding wall.

2. The shaping apparatus according to Claim 1, wherein the irradiating unit performs the scanning with the irradiation light in a moving direction in which the ejecting unit is moved relatively with respect to the bench unit.

3. The shaping apparatus according to Claim 2, wherein the irradiating unit is moved in the moving direction to perform the scanning with the irradiation light.

4. The shaping apparatus according to Claim 2, wherein the irradiating unit is rotated about a rotary axis orthogonal to the moving direction to perform the scanning with the irradiation light.

5. The shaping apparatus according to Claim 4, wherein the irradiating unit is rotated in a direction in which an emission surface of the irradiating unit emitting the irradiation light is separated from the ejecting unit to perform the scanning with the irradiation light.

6. The shaping apparatus according to Claim 1, wherein the irradiating unit performs the scanning with the irradiation light in an intersecting direction intersecting a direction in which the ejecting unit is moved relatively with respect to the bench unit.

7. The shaping apparatus according to Claim 6, wherein the irradiating unit is moved in the intersecting direction to perform the scanning with the irradiation light.

8. The shaping apparatus according to Claim 6, wherein the irradiating unit is rotated about a rotary axis orthogonal to the intersecting direction to perform the scanning with the irradiation light.

9. The shaping apparatus according to any one of Claims 1 to 8, wherein a shutter that is able to be lowered more than an upper end portion of the light shielding wall is provided between the ejecting unit and the irradiating unit.

10. The shaping apparatus according to any one of Claims 1 to 9, further comprising only one flattening unit which comes into contact with the ejected droplet on the bench unit to perform flattening.
